Europäisches Patentamt

European Patent Office

Office européen des brevets

(19)

(11) Numéro de publication: **0 187 368**
**B1**

(12)

# FASCICULE DE BREVET EUROPEEN

(45) Date de publication du fascicule du brevet:
**17.01.90**

(21) Numéro de dépôt: **85116463.2**

(22) Date de dépôt: **23.12.85**

(51) Int. Cl.⁴: **G02B 6/44**

(54) Dispositif de raccordement d'un câble à fibres optiques à un boîtier de jonction.

(30) Priorité: **28.12.84 FR 8420044**

(43) Date de publication de la demande:
**16.07.86 Bulletin 86/29**

(45) Mention de la délivrance du brevet:
**17.01.90 Bulletin 90/3**

(84) Etats contractants désignés:
**BE CH DE FR GB IT LI NL SE**

(56) Documents cités:
**EP-A- 0 066 829**
**EP-A- 0 083 101**
**EP-A- 0 089 057**
**EP-A- 0 184 050**

(73) Titulaire: **LES CABLES DE LYON Société anonyme dite:,
170 quai de Clichy, F-92111 Clichy Cedex(FR)**

(72) Inventeur: **Bonicel, Jean-Pierre, 14 rue des Tournelles,
F-69005 Lyon(FR)**
Inventeur: **Couvrie, Gérard, 143 avenue Barthélémy
Buyer, F-69005 Lyon(FR)**

(74) Mandataire: **Weinmiller, Jürgen et al,
Lennéstrasse 9 Postfach 24, D-8133 Feldafing(DE)**

ACTORUM AG

**Description**

La présente invention concerne un dispositif de raccordement à un boîtier de jonction d'un câble à fibres optiques et à élément porteur axial non métallique, notamment pour câbles de garde pour lignes à haute tension.

On a déjà proposé dans la demande de brevet FR-A-2 524 986 de la Demanderesse un dispositif de jonction des extrémités de deux câbles sous-marins à fibres optiques, possédant chacun un coeur optique, une voûte en fils d'acier, un tube de cuivre rétreint sur la voûte, une gaine isolante, un conducteur de retour et une gaine de protection, comprenant à l'extrémité de chaque câble une pièce d'ancrage, une bague d'épanouissement des fils d'acier et un remplissage en résine durcissable dans lequel sont collées les extrémités des fils d'acier, bloquées entre les pièces d'ancrage et les bagues d'épanouissement.

Un tel dispositif est cependant relativement complexe et ne convient pas bien pour le raccordement d'un câble à élément porteur axial non métallique, notamment de câbles de garde à structure tubulaire ou à jonc central muni de rainures de logement des fibres optiques, avec un élément porteur axial en matériau composite (fibres de verre-résine époxy, fibres de verre-résine polyester, fibres de polyamide aromatique-résine polyester) ou en tresse de fibres non métalliques à résistance élevée (fibres de carbone). L'extrémité de tels câbles doit en effet être parfaitement bloquée dans le boîtier de raccordement et pouvoir supporter des efforts correspondant à un allongement d'au moins 0,8% sans subir de rupture ou de glissement.

La demande de brevet européen EP-A 0 184 050 également au nom de la demanderesse (état de la technique selon l'article 54(3) cBE) décrit par ailleurs un dispositif de raccordement à un boîtier de jonction d'un câble à fibres optiques et à élément porteur axial en matériau composite comprenant des fibres, ou en tresse de fibres, selon lequel à l'extrémité de l'élément axial les fibres du matériau composite ou de la tresse de cet élément sont epanouies en une houppe et immobilisées dans une résine polymérisée à froid remplissant une cavité solidaire du boîtier.

La présente invention a pour but de procurer un dispositif de raccordement qui assure un excellent blocage de l'extrémité de câble dans le boîtier, et permette à cette extrémité de supporter des efforts correspondant à un allongement d'au moins 0,8% sans rupture ni glissement, tout en étant d'une structure simple et facile à mettre en oeuvre.

Le dispositif selon l'invention est caractérisé en ce que l'extrémité de l'élément porteur axial est recourbée en col de cygne et immobilisée dans une résine polymérisée à froid, remplissant une cavité solidaire du boîtier.

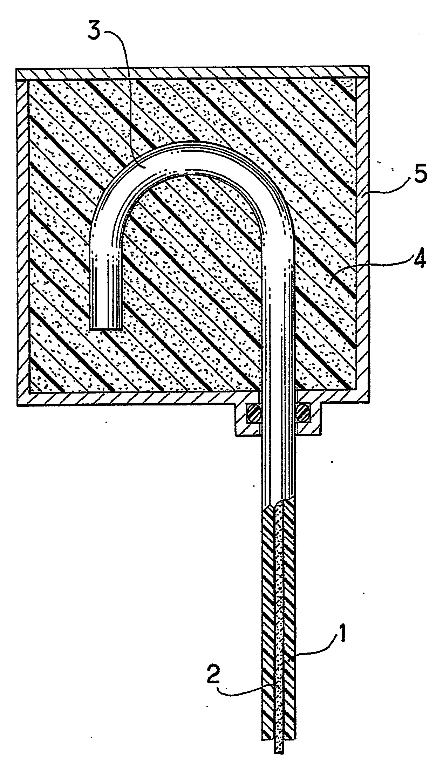

Il est décrit ci-après, à titre d'exemple et en référence à la figure unique du dessin, un dispositif de raccordement d'un câble sous-marin à jonc central rainuré en matière plastique et élément porteur axial composite en fibres de verre-résine époxy, à un boîtier de jonction.

Le jonc central 1 à élément porteur axial 2 se termine par un col de cygne 3, noyé dans une masse de résine époxy 4 disposée dans une cavité 5 solidaire du boîtier de jonction. Les fibres optiques, non représentées, s'écartent du jonc central 1 avant qu'il ne pénètre dans la cavité 4. Elles sont raccordées aux fibres optiques provenant de l'extrémité d'un autre câble, dans une cavité disposée dans le boîtier, de manière connue, assurant une surlongueur de raccordement, par exemple de façon analogue à la structure décrite dans le document FR-A-2 524 986.

On a effectué un essai de résistance à la rupture et au glissement sur un jonc en matière plastique à élément porteur axial en composite fibres de verre-résine disposé verticalement et bloqué à chaque extrémité par un col de cygne dans un boîtier rempli d'une résine époxy polymérisée à froid. Le boîtier inférieur était soumis à un effort de traction imprimant au jonc un allongement de 1%. Il n'a été constaté aucune rupture ni aucun glissement à l'issue d'une période d'observation de 2 mois.

On a par ailleurs effectué des essais comparatifs de résistance à la traction sur des éléments porteurs de 200 mm de long, comportant à chaque extrémité un tronçon de 140 mm noyé dans une résine époxy remplissant une cavité, d'une part avec un élément porteur à tronçons d'extrémité rectilignes, d'autre part avec un élément porteur à tronçons d'extrémité recourbés en col de cygne. Une première série d'essais a été effectuée avec un élément porteur en composite fibres de verre-résine époxy à fibres de 0,9 mm de diamètre commercialisé sous la désignation "Grillo ZEV", sur lequel on a mesuré la résistance à la rupture par traction Rr (en daN), l'allongement à la rupture Ar (en %) et la résistance à la rupture par unité de section transversale TR (en mégapascals).

Les résultats de ces essais sont résumés dans les tableaux I et II ci-dessous:

TABLEAU I
Jonc à extrémité col de cygne

|  | Essai 1 | 2 | 3 | 4 | 5 | Moyenne |
|---|---|---|---|---|---|---|
| Rr (daN) | 80,2 | 73,5 | 78,2 | 82 | 77,5 | 78,3 |
| Ar (%) | 4,73 |  |  |  |  |  |
| TR (MPa) | 1237 | 1133 | 1206 | 1264 | 1195 | 1027 |

Rr de l'élément porteur annoncée par le fabricant: 81 daN

TABLEAU II
Jonc à extrémité rectiligne sans col de cygne

|  | Essai 1 | 2 | 3 | 4 | 5 | Moyenne |
|---|---|---|---|---|---|---|
| Rr (daN) | 58,8 | 61 | 71 | 64,6 | 66 | 64,3 |
| Ar (%) | nombreux glissements avant rupture |  |  |  |  |  |
| TR (MPa) | 907 | 941 | 1095 | 996 | 1018 | 991 |

Rr fabricant: 81 daN

On a effectué une seconde série d'essais analogues comparatifs sur un élément porteur en composite fibres de verre-résine époxy à fibres de verre de 0,75 mm de diamètre, commercialisé sous la dénomination "Neptco LLE".
Les résultats de ces essais sont résumés dans les tableaux III et IV ci-dessous :

TABLEAU III
Jonc à extrémité en col de cygne

|  | Essai 1 | 2 | 3 | 4 | 5 | Moyenne |
|---|---|---|---|---|---|---|
| Rr (daN) | 64 | 64,6 | 62 | 54 | 56 | 60,1 |
| Ar (%) | glissements |  |  |  |  |  |
| TR (MPa) | 1421 | 1434 | 1378 | 1199 | 1243 | 1335 |

Rr de l'élément porteur annoncée par le fabricant: 64,7 daN

TABLEAU IV
Jonc à extrémité rectiligne sans col de cygne

|  | Essai 1 | 2 | 3 | 4 | 5 | Moyenne |
|---|---|---|---|---|---|---|
| Rr (daN) | 47,2 | 35 | 59,4 | 63,4 | 29,8 | 47,0 |
| Ar (%) | glissements |  |  |  |  |  |
| TR (MPa) | 1048 | 777 | 1319 | 1408 | 662 | 1043 |

Rr fabricant: 64,7 daN

On observe donc avec les deux séries d'essai que la présence d'une extrémité en col de cygne procure une augmentation importante de la résistance à la traction et tend à réduire les glissements de l'extrémité du jonc sous tension.

**Revendications**

Dispositif de raccordement à un boîtier de jonction d'un câble à fibres optiques et à élément porteur axial (1, 2) non métallique, caractérisé en ce que l'extrémité de l'élément porteur axial (1, 2) est recourbée en col de cygne (3) et immobilisée dans une résine polymérisée à froid (4) remplissant une cavité (5) solidaire du boîtier.

**Claims**

A connection device between a junction box and an optical fibre cable having a non-metallic axial strength member (1, 2), characterized in that the end of the axial strength member (1, 2) is curved into a swan-nack shape (3) and immobilized in cold polymerized resin which fills a cavity integral with the box.

**Patentansprüche**

Vorrichtung zum Verbinden eines optischen Faserkabels, das einen nichtmetallischen axialen Träger (1, 2) aufweist, mit einem Anschlußgehäuse, dadurch gekennzeichnet, daß das Ende des axialen Trägerelements (1, 2) schwanenhalsförmig (3) umgebogen und in einem kalt polymerisierten Kunstharz (4) festgelegt ist, das einen mit dem Gehäuse verbundenen Hohlraum (5) ausfüllt.

EP 0 187 368 B1